# EUROPÄISCHE PATENTSCHRIFT

(11) **EP 3 991 929 B1**
(45) Veröffentlichungstag und Bekanntmachung des Hinweises auf die Patenterteilung: **03.12.2025**
(21) Anmeldenummer: 21203967.1
(22) Anmeldetag: 21.10.2021
(51) Int. Cl.: B26D 5/00, B26D 7/34, B26D 7/32, B26D 7/06

(54) **AUFSCHNEIDEVORRICHTUNG MIT BEHANDLUNGSMITTELEINRICHTUNG**
SLICING DEVICE WITH TREATMENT AGENT DEVICE
DISPOSITIF DE TRANCHAGE AVEC DISPOSITIF D'AGENT DE TRAITEMENT

(30) Priorität: 29.10.2020 DE 102020128533
(43) Veröffentlichungstag der Anmeldung: 04.05.2022
(60) Teilanmeldung: 25200019.5
(73) Patentinhaber: Weber Food Technology SE & Co. KG, 35236 Breidenbach (DE)
(72) Erfinder: REICHARD, Axel, 57072 Siegen (DE); ARNOLD, Thorsten, 35232 Dautphetal (DE); HORST, Theo, 35287 Amöneburg/Rossdorf (DE); RUNKEL, Andreas, 35216 Biedenkopf (DE)
(74) Vertreter: Manitz Finsterwald Patent- und Rechtsanwaltspartnerschaft mbB

(56) Entgegenhaltungen:
- WO-A1-2012/151397
- DE-A1- 102007 048 015
- DE-A1- 102013 207 401

## Beschreibung

Die Erfindung betrifft eine Aufschneidevorrichtung zum Aufschneiden von Lebensmittelprodukten, insbesondere einen Hochleistungsslicer, gemäß dem Oberbegriff des Anspruchs 1.

Die Erfindung betrifft außerdem gemäß Anspruch 9 ein Verfahren zum Betreiben einer Aufschneidevorrichtung wie hierin offenbart.

Derartige, auch als Slicer bezeichnete Aufschneidevorrichtungen sind grundsätzlich bekannt. Insbesondere stangen-, riegel- oder laibförmige Lebensmittelprodukte wie zum Beispiel Wurst, Käse oder Schinken können mit Slicern in Scheiben geschnitten werden, wobei Hochleistungsslicer Schnittgeschwindigkeiten zwischen mehreren 100 bis einigen 1.000 Scheiben pro Minute erreichen.

Zum Abtrennen der Scheiben von den Produkten dient ein Schneidmesser, bei dem es sich in der Praxis meist um ein lediglich um eine eigene Messerachse rotierendes Sichelmesser oder um ein Kreismesser handelt, das um eine eigene Messerachse rotiert und zusätzlich um eine weitere Drehachse, die parallel versetzt zur Messerachse verläuft, planetarisch umläuft. Durch diese Schneidebewegungen des jeweiligen Schneidmessers wird durch die Schneide des Schneidmessers eine Schneidebene definiert. Die Zufuhr der Produkte erfolgt in der Praxis meist in einer Zufuhrrichtung, die senkrecht zu dieser Schneidebene verläuft, wobei in manchen Anwendungen die Produkte der Schneidebene auch unter einem von 90° verschiedenen Winkel zugeführt werden können.

Wie bei vielen bekannten Slicern kann auch bei einem erfindungsgemäßen Slicer vorgesehen sein, dass die Produkte während des Schneidebetriebs relativ zur Horizontalen geneigt sind. Insbesondere liegen die Produkte auf einer Produktauflage auf, die beispielsweise von einem oder mehreren Transportbändern oder auch von einer lediglich eine Auflage bildenden, passiven Gleitfläche bereitgestellt werden kann. Durch die Neigung der Produkte während des Schneidebetriebs gelangen die abgetrennten Scheiben besser unter Wirkung der Schwerkraft auf den Portionierbereich, der in der Praxis meist von einem sogenannten Portionierband gebildet wird, bei dem es sich um ein vergleichsweise kurzes Endlosförderband handelt, mit dem die im Portionierbereich aus einer oder mehreren Scheiben gebildeten Portionen rasch abtransportiert und einer Weiterverarbeitung zugeführt werden können.

Bei dieser Weiterverarbeitung handelt es sich insbesondere um ein Verpacken der Portionen. Eine typische Lebensmittelverarbeitungslinie umfasst am Anfang einen Slicer der hierin offenbarten Art und am Ende eine automatische Verpackungsmaschine. Zwischen Slicer und Verpackungsmaschine können weitere Einrichtungen, beispielsweise zum Wiegen, Sortieren, Puffern etc. der Portionen vorgesehen sein. Dies ist dem Fachmann grundsätzlich bekannt, so dass hierauf nicht näher eingegangen zu werden braucht.

In Abhängigkeit von der jeweiligen Anwendung kann eine Portion auch von lediglich einer einzigen abgetrennten Scheibe gebildet werden. Auch ist es möglich, vergleichsweise dicke Teile von einem Lebensmittelprodukt abzutrennen. Dies ist insbesondere dann der Fall, wenn Frischfleisch aufgeschnitten wird. Die abgetrennten Teile werden dann auch als Stücke bezeichnet. Derartige Stücke können ebenfalls portioniert werden, d.h. eine Portion im Sinne der vorliegenden Offenbarung kann ein oder mehrere zumindest teilweise übereinander liegende Stücke umfassen. Zur Vereinfachung der hier verwendeten Terminologie ist ein solches Stück eine Scheibe im Sinne der vorliegenden Offenbarung.

Wenn eine Portion von mehreren Scheiben gebildet wird, können diese mehr oder weniger exakt übereinander liegen. Man spricht in diesem Zusammenhang auch von einem Scheibenstapel. Es ist aber auch möglich, dass sich die Scheiben einer Portion teilweise überlappen, also nicht wie in einem Produktstapel mehr oder weniger exakt übereinander liegen. Eine solche Anordnung von Scheiben wird auch als geschindelte Anordnung bezeichnet. In der Praxis sind vielfältige Portionierungsmöglichkeiten mit ganz unterschiedlichen Portionsgestaltungen bekannt, die insbesondere auch dadurch erzeugt werden können, dass eine eine Produktauflage im Portionierbereich bildende Einrichtung während des Abtrennens der zu einer Portion gehörenden Scheiben bewegt, beispielsweise gedreht, wird, um auf diese Weise aus mehreren einander überlappenden Scheiben zum Beispiel eine kreisförmige Portion zu bilden.

Bekannte Slicer arbeiten häufig mehrspurig, d.h. mehrere nebeneinanderliegende, parallel zueinander ausgerichtete Produkte werden gleichzeitig dem Schneidbereich zugeführt. Die Produktzufuhr kann spurindividuell erfolgen, d.h. die Produkte in den einzelnen Spuren können unabhängig voneinander zugeführt werden. Die hierfür eingesetzten Vorrichtungen und die damit verbundenen Vorteile, die auch - aber nicht nur - in einem höheren Produktdurchsatz liegen, sind dem Fachmann grundsätzlich bekannt. Obwohl auch Mehrspur-Slicer mit mehreren gleichzeitig im Einsatz befindlichen Schneidmessern bekannt sind, weisen die meisten bekannten mehrspurig betreibbaren Slicer ein einziges Schneidmesser auf, bei dem es sich meist um ein entsprechend großes Sichelmesser oder Kreismesser handelt, um gleichzeitig von den nebeneinanderliegenden Produkten jeweils eine Scheibe abzutrennen. Dabei ist "gleichzeitig" in dem Sinne zu verstehen, dass das Schneidmesser während einer Messerumdrehung - nämlich während eines Arbeitstaktes des Slicers - in allen Spuren wirksam ist, dabei aber natürlich die Spuren zeitlich nacheinander durchläuft.

Insbesondere für den Endverbraucher besteht bei in einer Portion unmittelbar aufeinanderliegenden Lebensmittelscheiben das Problem, dass es schwierig sein kann, die Scheiben voneinander zu trennen. Dieses Problem tritt insbesondere bei vergleichsweise dünn geschnittenen Produkten, wie beispielsweise Rohschinken, oder bei relativ klebrigen Produkten, wie beispielsweise manchen Käsesorten, auf.

Begegnet wird diesem Problem seit langem unter anderem mit sogenannten Interleavern, bei denen es sich um eine in die Aufschneidevorrichtung integrierte Zusatzeinrichtung handelt, mit der automatisch Zwischenblätter aus Papier oder Folie zwischen aufeinanderfolgende abgetrennte Scheiben gebracht werden. Diese Zwischenblätter erleichtern dann die Entnahme einzelner Lebensmittelscheiben aus einer eine jeweilige Portion enthaltenden Packung.

Derartige Interleaver sind allerdings vergleichsweise aufwendig konstruierte Einrichtungen, die einen Slicer folglich entsprechend verteuern. Zudem führen die Interleaver zu mehr Verpackungsmüll, was zunehmende Akzeptanzprobleme auf Seiten des Endverbrauchers bedeutet.

Als eine Alternative zu Interleavern ist es ebenfalls bereits bekannt, flüssige Trennmittel - insbesondere auf Basis von zum Verzehr geeigneten Ölen - beispielsweise durch Sprühen auf die Flachseiten der Scheiben aufzubringen, so dass sich aufeinanderliegende Scheiben leichter voneinander lösen lassen. Bekannte Nachteile dieser Systeme sind die mangelnde Einstellbarkeit und die nicht vorhandene Anpassbarkeit an den Betrieb des jeweiligen Slicers. Die gleichen Nachteile besitzen Systeme zum Behandeln der Lebensmittelscheiben mit flüssigen Schutzmitteln, die beispielsweise eingesetzt werden, um die Lebensmittel länger haltbar zu machen.

Aufschneidevorrichtungen gemäß dem Oberbegriff des unabhängigen Anspruchs 1 sowie Verfahren zum Betrieb solcher Aufschneidevorrichtungen sind in der WO 2012/151397 A1 und der DE 10 2007 048015 A1 offenbart.

Aufgabe der Erfindung ist es daher, eine Aufschneidevorrichtung der eingangs genannten Art sowie ein Verfahren zum Betreiben einer Aufschneidevorrichtung zu schaffen, die mit möglichst geringem Aufwand eine einfache, zuverlässige und gezielte Behandlung der Lebensmittelprodukte mit einer Flüssigkeit ermöglichen.

Die Lösung dieser Aufgabe erfolgt jeweils durch die Merkmale der unabhängigen Ansprüche.

Bei einer erfindungsgemäßen Aufschneidevorrichtung ist insbesondere vorgesehen, dass in die Aufschneidevorrichtung eine Behandlungsmitteleinrichtung zum Bereitstellen eines flüssigen Behandlungsmittels integriert ist, die dazu ausgebildet ist, das Behandlungsmittel während des Schneidebetriebs derart bereitzustellen, dass das Behandlungsmittel auf eine jeweilige Schnittfläche eines Produktes und/oder auf zumindest eine jeweilige Flachseite wenigstens einer Scheibe aufgebracht wird, und wobei für die Behandlungsmitteleinrichtung eine Steuereinheit vorgesehen ist, die dazu ausgebildet ist, den Betrieb der Behandlungsmitteleinrichtung in Abhängigkeit von dem Schneidebetrieb auf der Basis von zumindest einem Teil der Betriebsinformationen der Steuereinrichtung zu steuern.

Bei dem erfindungsgemäßen Verfahren ist insbesondere vorgesehen, dass in die Aufschneidevorrichtung eine Behandlungsmitteleinrichtung integriert ist, mit der während des Schneidebetriebs ein flüssiges Behandlungsmittel auf eine jeweilige Schnittfläche eines Produktes und/oder zumindest auf eine jeweilige Flachseite wenigstens einer Scheibe aufgebracht wird, wobei der Betrieb der Behandlungsmitteleinrichtung auf der Basis von zumindest einem Teil der Betriebsinformationen der Steuereinrichtung gesteuert wird.

Die Erfindung beruht auf dem Gedanken, die Behandlungsmitteleinrichtung nicht als eine selbstständige Einheit zu konzipieren, die ohne Berücksichtigung von Betriebsinformationen der Steuereinrichtung der Aufschneidevorrichtung und dabei entweder völlig unabhängig von dem Schneidebetrieb oder ausschließlich auf der Basis einer eigenen Sensorik arbeitet, sondern den Betrieb der Behandlungsmitteleinrichtung von zumindest einem Teil der Betriebsinformationen der Steuereinrichtung der Aufschneidevorrichtung abhängig zu machen.

Auf diese Weise kann das Bereitstellen des Behandlungsmittels gezielt an die Bedürfnisse des jeweiligen Schneidebetriebs angepasst werden. Beispielsweise Zeitpunkt, Menge und/oder Richtung der Abgabe des Behandlungsmittels können in Abstimmung mit dem Schneidebetrieb erfolgen und zum Beispiel auch während des Schneidebetriebs geändert werden.

Lediglich als ein Beispiel für die Vorteile der Erfindung sei die erstmals durch die Erfindung geschaffene Möglichkeit erwähnt, eine Abgabe von Behandlungsmittel zu unterbinden, wenn die Aufschneidevorrichtung sogenannte Leerschnitte ausführt. Die meisten Hochgeschwindigkeitsslicer führen Leerschnitte aus, wenn eine zuvor fertiggestellte Portion abtransportiert wird, um vorübergehend keine abgetrennten Scheiben zu produzieren. Das Schneidmesser führt weiterhin Schneidbewegungen aus, es wird aber vorübergehend die Produktzufuhr angehalten, so dass keine Scheiben abgetrennt werden. Eine herkömmliche selbstständige Behandlungsmitteleinrichtung wäre nicht dazu in der Lage, ausreichend schnell einen beginnenden oder stattfindenden Leerschnittbetrieb zu erkennen. Wenn dagegen der Steuereinheit der Behandlungsmitteleinrichtung Betriebsinformationen von der im Folgenden auch einfach als Slicersteuerung bezeichneten Steuereinrichtung der Aufschneidevorrichtung zur Verfügung gestellt werden, mit der die Slicersteuerung einen Leerschnittbetrieb ausführt, also die Produktzufuhr entsprechend ansteuert, dann können diese Betriebsinformationen von der Steuereinheit der Behandlungsmitteleinrichtung genutzt werden, um dafür zu sorgen, dass während des Leerschnittbetriebs keine Bereitstellung von Behandlungsmittel erfolgt. Hierdurch wird der Behandlungsmittelverbrauch reduziert und eine unnötige Verunreinigung der Aufschneidevorrichtung durch das Behandlungsmittel wird verhindert.

Bereits aus diesem einen Beispiel wird ersichtlich, dass durch Nutzung der in der Slicersteuerung verfügbaren Informationen über den Schneidebetrieb der Aufschneidevorrichtung vielfältige Möglichkeiten bestehen, die Bereitstellung des Behandlungsmittels optimal an den Schneidebetrieb anzupassen.

Ein anderes anschauliches Beispiel ist die Nutzung von Informationen über die momentane Scheibengröße, also die Größe einer Scheibe, die momentan oder als Nächstes von dem Produkt abgetrennt wird. Die Steuereinrichtungen bekannter Aufschneidevorrichtungen verfügen bereits über solche Informationen, wenn die betreffende Aufschneidevorrichtung z.B. mit einer entsprechenden Sensorik versehen ist. Bei einem solchen Sensor kann es sich beispielsweise um einen der Aufschneidevorrichtung vorgelagerten oder in die Aufschneidevorrichtung integrierten Scanner handeln, der die äußere Produktkontur vermisst. Der Slicersteuerung sind dann sowohl Orientierung als auch Größe des jeweiligen Produktquerschnitts an der Schneidebene bekannt. Diese Informationen werden bereits z.B. dazu genutzt, das Gewicht einer Produktscheibe zu bestimmen. Auf dem hier einschlägigen Fachgebiet ist dieses Messprinzip auch unter dem Stichwort "optische Waage" bekannt. Andere bekannte Systeme erfassen die Schnittfläche des jeweiligen Produktes (und damit eine Flachseite der als Nächstes abgetrennten Scheibe), um insbesondere unterschiedliche Produktanteile und deren Verhältnis innerhalb der Schnittfläche zu erkennen bzw. zu bestimmen, beispielsweise das Verhältnis von Fettanteil und Magerfleisch bei Schinken. Die Produktkontur und damit Größe und Orientierung der Schnittfläche können mit derartigen Systemen ebenfalls erfasst werden und werden in der Praxis in bestimmten Anwendungen bereits erfasst.

Orientierung und Größe der Schnittfläche können erfindungsgemäß jeweils der Steuereinheit der Behandlungsmitteleinrichtung zur Verfügung gestellt werden, um so z.B. in Abhängigkeit von der Größe der Schnittfläche die Menge des für die jeweilige Scheibe bereitzustellenden Behandlungsmittels anzupassen oder in Abhängigkeit von der Orientierung der Schnittfläche eine zum Abgeben des Behandlungsmittels dienende Düse entsprechend auszurichten. Wenn die Behandlungsmitteleinrichtung beispielsweise für ein Produkt mehrere Düsen aufweist, aus denen Behandlungsmittel für dieses Produkt abgegeben werden kann, dann kann die Steuereinheit der Behandlungsmitteleinrichtung z.B. die Anzahl der einzusetzenden Düsen in Abhängigkeit von der Größe und/oder der Orientierung der Schnittfläche festlegen.

Weitere vorteilhafte Ausgestaltungen sowohl der erfindungsgemäßen Aufschneidevorrichtung als auch des erfindungsgemäßen Verfahrens sind auch in den abhängigen Ansprüchen, der Zeichnung sowie der nachfolgenden Beschreibung angegeben.

Der Schneidebetrieb bzw. die den Schneidebetrieb betreffenden Betriebsinformationen umfassen grundsätzlich alles, was in irgendeiner Form mit einem jeweiligen Betrieb der Aufschneidevorrichtung zu tun hat. Hierunter fallen insbesondere sowohl Parameter oder Kenngrößen der Aufschneidevorrichtung als auch Parameter oder Eigenschaften der jeweils aufzuschneidenden Produkte.

So können die Betriebsinformationen beispielsweise die jeweilige Konfiguration der Aufschneidevorrichtung umfassen, beispielsweise den Typ des Schneidmessers, die Größe des Schneidmessers und die Schnittgeschwindigkeit (also die Anzahl der Schneidbewegungen des Schneidmessers pro Zeiteinheit). Hinsichtlich der Produkte können die Betriebsinformationen den Produkttyp, die Konsistenz des Produkts, die "Klebrigkeit" des Produkts oder - wie vorstehend bereits erläutert - die Größe und/oder die Orientierung der Produktscheiben betreffen.

Auch können die Betriebsinformationen den zeitlichen Ablauf des Schneidebetriebs betreffen, indem beispielsweise von der Behandlungsmitteleinrichtung berücksichtigt wird, wann während eines Arbeitstaktes - also während einer Arbeitsbewegung, insbesondere eines Umlaufs, des Schneidmessers - bei einer mehrspurigen Produktzufuhr in einer jeweiligen Spur eine Scheibe von dem betreffenden Produkt vollständig abgetrennt worden ist. Denn dies erfolgt - aufgrund des eine gewisse Zeit dauernden Durchgangs des Schneidmessers durch den Schneidbereich - in den einzelnen Spuren zeitlich nacheinander.

Des Weiteren können die Betriebsinformationen eine jeweilige Arbeitsposition einer Komponente der Aufschneidevorrichtung umfassen. Hierbei kann es sich beispielsweise um die Winkelposition des umlaufenden oder rotierenden Schneidmessers oder um die Position einer Zufuhreinrichtung der Produktzufuhr in Zufuhrrichtung handeln, beispielsweise um die Position eines am hinteren Ende eines jeweiligen Produktes angreifenden Produkthalters oder eines Produkttransportbandes, auf dem ein jeweiliges Produkt aufliegt oder das ein jeweiliges Produkt von der Seite oder von oben beaufschlagt.

Wie vorstehend bereits erläutert, können die Betriebsinformationen außerdem Messwerte von Sensoren umfassen, die Informationen über die Produkte, über eine oder mehrere Komponenten der Aufschneidevorrichtung oder über bestimmte Wechselbeziehungen zwischen einem jeweiligen Produkt und einer oder mehreren Komponenten der Aufschneidevorrichtung erfassen.

Die Steuereinheit der Behandlungsmitteleinrichtung kann in die Steuereinrichtung der Aufschneidevorrichtung, also in die Slicersteuerung, integriert sein, sie kann von der Slicersteuerung gebildet sein, oder sie kann als separate Einheit vorgesehen, aber mit der Steuereinrichtung drahtgebunden oder drahtlos verbunden sein.

Das Verhältnis von Slicersteuerung und Steuereinheit der Behandlungsmitteleinrichtung kann nach einem Konzept organisiert sein, das in der Vergangenheit als "Master-Slave" bezeichnet wurde und für welches derzeit zunehmend andere Bezeichnungen verwendet werden, beispielsweise "Primary-Secondary", wobei die Slicersteuerung den "Master" bzw. "Primary" und die Steuereinheit der Behandlungsmitteleinrichtung den "Slave" bzw. "Secondary" bildet.

Bei dem flüssigen Behandlungsmittel kann es sich beispielsweise um ein ein störendes Zusammenkleben von Scheiben verhinderndes und somit das Trennen zweier aufeinanderliegender Scheiben erleichterndes Trennmittel handeln, das beispielsweise auf einem pflanzlichen Öl basiert. Alternativ kann es sich bei dem Behandlungsmittel um ein Schutzmittel handeln, das insbesondere die Haltbarkeit des betreffenden Lebensmittels verbessert. Beispielsweise kann das Schutzmittel mit einer Eigenschaft versehen sein, welche die Bildung von Keimen oder Schimmel verhindert oder verzögert. Das Schutzmittel kann beispielsweise entsprechende Mikroorganismen enthalten.

In einigen Ausführungsbeispielen der Erfindung kann vorgesehen sein, dass die Behandlungsmitteleinrichtung dazu ausgebildet ist, Behandlungsmittel berührungslos aufzubringen. Dies kann beispielsweise durch eine berührungslose Dosierung erfolgen, die auch als "Jetten" bezeichnet wird. Auf diese Weise brauchen die Produkte oder Scheiben die Behandlungsmitteleinrichtung nicht zu berühren, um das Behandlungsmittel aufzubringen. Alternativ ist es erfindungsgemäß aber auch möglich, z.B. einen oder mehrere Abstreifer vorzusehen, die jeweils mit dem Produkt oder einer jeweiligen Scheibe in Berührung treten, um das Behandlungsmittel aufzubringen.

Gemäß manchen Ausführungsbeispielen kann die Behandlungsmitteleinrichtung dazu ausgebildet sein, Behandlungsmittel in Form einzelner, fliegender Flüssigkeitsmengen abzugeben oder Behandlungsmittel zu versprühen.

Des Weiteren kann vorgesehen sein, dass die Behandlungsmitteleinrichtung dazu ausgebildet ist, Behandlungsmittel zeitlich kontinuierlich oder zeitlich diskontinuierlich abzugeben. Bei einer zeitlich diskontinuierlichen Abgabe von Behandlungsmitteln kann dies beispielsweise in regelmäßigen zeitlichen Abständen erfolgen. Insbesondere kann die Abgabe im Takt der Arbeitsbewegungen des Schneidmessers erfolgen. Dies schließt aber nicht aus, dass - wie an anderer Stelle bereits erläutert - vorübergehend keine Abgabe von Behandlungsmittel erfolgt, beispielsweise während mehrerer aufeinanderfolgender Arbeitstakte in einer Leerschnittphase der Aufschneidevorrichtung. Bei einer zeitlich kontinuierlichen Abgabe von Behandlungsmittel kann beispielsweise permanent durch Versprühen von Behandlungsmittel ein Nebel aus Behandlungsmittel erzeugt werden. Dies schließt nicht aus, dass vorübergehend keine Abgabe von Behandlungsmittel erfolgt, beispielweise in Schneidepausen jeweils nach dem vollständigen Aufschneiden eines Produktes bis zum Beginn des Aufschneidens des nächstens Produktes in der betreffenden Spur.

Des Weiteren kann in manchen Ausführungsformen der Erfindung vorgesehen sein, dass die Behandlungsmitteleinrichtung bei einspuriger Produktzufuhr für die eine Spur oder bei mehrspuriger Produktzufuhr für jede Spur wenigstens eine Abgabeöffnung für Behandlungsmittel aufweist. Bei einer mehrspurigen Produktzufuhr kann die Behandlungsmitteleinrichtung spurindividuell betreibbar sein. Dies bedeutet, dass die Bereitstellung von Behandlungsmittel an jeder Spur oder an einer Gruppe von Spuren unabhängig von einer oder mehreren anderen Spuren oder Gruppen von Spuren erfolgen kann.

Die oder jede Abgabeöffnung kann von einer Düse gebildet sein. Es kann vorgesehen sein, dass die Abgabeöffnung mittels der Steuereinheit gezielt entweder freigegeben oder geschlossen werden kann, z.B. mittels eines ansteuerbaren Ventils, das der betreffenden Abgabeöffnung oder einer Gruppe von die betreffende Abgabeöffnung umfassenden Abgabeöffnungen zugeordnet ist, und es kann alternativ oder zusätzlich vorgesehen sein, dass die Abgaberichtung von Behandlungsmittel mittels der Steuereinheit verändert werden kann, z.B. durch Verstellen einer die Abgabeöffnung bildenden Düse.

Das Aufbringen des Behandlungsmittels auf das Lebensmittel kann auf unterschiedliche Art und Weise erfolgen. So kann beispielsweise das Behandlungsmittel auf die jeweilige Schnittfläche eines Produktes aufgebracht werden, also auf die Flachseite einer jeweils als Nächstes abgetrennten Scheibe. Das Behandlungsmittel kann alternativ auf eine bereits abgetrennte Scheibe aufgebracht werden, und zwar entweder nur auf eine Flachseite oder auf beide Flachseiten der jeweiligen Scheibe. Der Zeitpunkt des Aufbringens des Behandlungsmittels auf eine jeweilige Scheibe kann grundsätzlich beliebig gewählt werden. Das Behandlungsmittel kann auf eine abgetrennte, aber noch im Fallen befindliche Scheibe aufgebracht werden. Alternativ kann das Behandlungsmittel auf eine bereits liegende Scheibe aufgebracht werden, insbesondere wenn die Scheibe sich noch im Portionierbereich befindet. So kann das Behandlungsmittel beispielsweise auf die Oberseite der zuletzt im Portionierbereich zum Liegen gekommenen Scheibe aufgebracht werden, bevor die nächste Scheibe auf die so im Entstehen befindliche Portion im Portionierbereich fällt.

Dementsprechend kann in manchen Ausführungsformen der Aufschneidevorrichtung vorgesehen sein, dass die Abgabeöffnung auf den Schneidbereich gerichtet ist oder gerichtet werden kann, um das Behandlungsmittel auf eine jeweilige Schnittfläche eines Produktes, das momentan aufgeschnitten wird, aufzubringen, oder dass die Abgabeöffnung auf einen zwischen dem Schneidbereich und dem Portionierbereich liegenden Fallbereich der von einem jeweiligen Produkt, das momentan aufgeschnitten wird, abgetrennten Scheiben, oder auf den Portionierbereich gerichtet ist oder gerichtet werden kann, um das Behandlungsmittel auf eine jeweilige Flachseite einer fallenden oder liegenden Scheibe aufzubringen.

Erfindungsgemäß umfasst die Behandlungsmitteleinrichtung zumindest eine Abgabeeinheit, die wenigstens eine Abgabeöffnung aufweist und die mit einem Behandlungsmittelvorrat in Verbindung steht. Die Abgabeeinheit kann an einer jeweils optimal geeigneten Stelle an oder in der Aufschneidevorrichtung so angeordnet werden, dass die wenigstens eine Abgabeöffnung in der jeweils gewünschten Weise positioniert und/oder ausgerichtet ist. Mit dem Behandlungsmittelvorrat, der beispielsweise wenigstens einen Behälter umfassen kann, der an oder in der Aufschneidevorrichtung angeordnet und insbesondere auswechselbar und/oder nachfüllbar ist, kann die Abgabeeinheit beispielsweise über eine oder mehrere flexible Leitungen verbunden sein. Auf diese Weise kann die Behandlungsmitteleinrichtung flexibel an die jeweiligen baulichen Gegebenheiten der Aufschneidevorrichtung angepasst und in diese integriert werden.

Des Weiteren kann erfindungsgemäß vorgesehen sein, dass alle Abgabeöffnungen der Behandlungsmitteleinrichtung oder zumindest eine Gruppe von Abgabeöffnungen der Behandlungsmitteleinrichtung in eine gemeinsame Abgabeeinheit integriert sind, wobei bei mehrspuriger Produktzufuhr die Abgabeeinheit mehreren Spuren zugeordnet ist. Eine solche gemeinsame Abgabeeinheit erleichtert die Integration der Behandlungsmitteleinrichtung in die Aufschneidevorrichtung, insbesondere wenn eine Vielzahl von Abgabeöffnungen oder Düsen vorgesehen ist, was insbesondere dann der Fall ist, wenn die Aufschneidevorrichtung mehrspurig ist.

Die Abgabeeinheit umfasst einen sich quer zur Zufuhrrichtung erstreckenden Träger, an oder in dem mehrere jeweils eine Abgabeöffnung bildende Düsen sowie zu den Düsen führende Zufuhrleitungen für das Behandlungsmittel angebracht sind.

Des Weiteren kann bei manchen Ausführungsbeispielen vorgesehen sein, dass die Behandlungsmitteleinrichtung bei einspuriger Produktzufuhr für die eine Spur oder bei mehrspuriger Produktzufuhr für zumindest eine Spur mehrere Abgabeöffnungen aufweist, die unabhängig voneinander ansteuerbar sind. An anderer Stelle wurde bereits erwähnt, dass auf diese Weise eine besonders flexible Anpassung an den jeweiligen Schneidebetrieb erfolgen kann, indem beispielsweise in Abhängigkeit von der jeweiligen Anwendung nur ein Teil der für die jeweilige Spur grundsätzlich vorgesehenen Abgabeöffnungen verwendet wird. Auch ist es z.B. möglich, verschiedene Behandlungsmittel vorzusehen und beispielsweise in Abhängigkeit von der Anwendung entweder das eine Behandlungsmittel über eine oder mehrere der Abgabeöffnungen oder ein davon verschiedenes Behandlungsmittel über eine oder mehrere der anderen Abgabeöffnungen aufzubringen. Des Weiteren ist es auch möglich, mehrere Abgabeöffnungen gleichzeitig zu verwenden, über diese aber verschiedene Behandlungsmittel - und diese also gleichzeitig - aufzubringen.

Gemäß weiteren Ausführungsbeispielen der Erfindung kann vorgesehen sein, dass das Behandlungsmittel mehrere separat bevorratete Komponenten umfasst, die vor oder bei Abgabe durch eine Abgabeöffnung zusammenführbar sind. Dabei kann beispielsweise eine der Komponenten aktiv, insbesondere mittels einer Pumpe, der jeweiligen Abgabeöffnung zugeführt werden, wobei die Strömung dieser Komponente im Bereich der Abgabeöffnung unter Ausnutzung des Venturi-Prinzips die andere Komponente des Behandlungsmittels durch Ansaugen fördern kann, so dass als Behandlungsmittel eine Mischung der mehreren Komponenten bereitgestellt wird.

Wie an anderer Stelle bereits erwähnt, kann gemäß einigen Ausführungsbeispielen der Erfindung vorgesehen sein, dass die Behandlungsmitteleinrichtung hinsichtlich des Abgabezeitpunktes, insbesondere bezogen auf den Takt der Arbeitsbewegungen des Schneidmessers, und/oder hinsichtlich der Abgabemenge und/oder hinsichtlich der Abgaberichtung des Behandlungsmittels gesteuert wird.

Des Weiteren kann vorgesehen sein, dass während des Schneidebetriebs der Abgabezeitpunkt und/oder die Abgabemenge und/oder die Abgaberichtung des Behandlungsmittels variiert wird. Eine derartige Veränderung der Bereitstellung des Behandlungsmittels während des Schneidebetriebs kann beispielsweise von Produkt zu Produkt oder auch von Scheibe zu Scheibe erfolgen. Bei einem Mehrspurbetrieb der Aufschneidevorrichtung kann eine derartige Veränderung spurindividuell erfolgen.

Wie ebenfalls bereits an anderer Stelle erwähnt, kann gemäß einigen Ausführungsbeispielen vorgesehen sein, dass während der Durchführung von Leerschnitten, bei denen das Schneidmesser Schneidebewegungen ausführt, aber von einem jeweiligen Produkt keine Scheiben abtrennt, kein Behandlungsmittel abgegeben wird.

Ferner kann bei dem erfindungsgemäßen Verfahren vorgesehen sein, dass während des Schneidebetriebs die Abgabe von Behandlungsmittel zeitlich auf die Arbeitsposition zumindest einer Komponente der Aufschneidevorrichtung abgestimmt wird. Die Abstimmung kann beispielsweise auf die Winkelposition des umlaufenden oder rotierenden Schneidmessers oder auf die Position einer Zufuhreinrichtung der Produktzufuhr in Zufuhrrichtung erfolgen, bevorzugt auf die Position eines Produkthalters oder eines Produkttransportbandes.

Gemäß manchen Ausführungsbeispielen des Verfahrens kann vorgesehen sein, dass während des Schneidebetriebs die Abgabe von Behandlungsmittel in Abhängigkeit von Messwerten zumindest eines der Aufschneidevorrichtung vorgelagerten Sensors oder zumindest eines in die Aufschneidevorrichtung integrierten Sensors gesteuert wird, insbesondere eines der Aufschneidevorrichtung vorgelagerten Sensors zum Bestimmen der äußeren Kontur und/oder der inneren Struktur eines jeweiligen Produktes, oder eines in die Aufschneidevorrichtung integrierten Sensors zur Bestimmung der Größe und/oder der Orientierung einer jeweiligen Schnittfläche eines Produktes, das momentan aufgeschnitten wird, oder eines in die Aufschneidevorrichtung integrierten Sensors zum Erkennen des Anfangs und/oder des Endes eines Produktes, das aufgeschnitten werden soll oder momentan aufgeschnitten wird.

Bei dem Sensor kann es sich um eine ohnehin für die Aufschneidevorrichtung vorgesehene Einrichtung handeln, deren Messwerte von der Steuereinrichtung der Aufschneidevorrichtung auch für andere Zwecke als zur Steuerung der Behandlungsmitteleinrichtung genutzt werden. Alternativ kann es sich bei dem Sensor auch um einen solchen handeln, der ausschließlich Messwerte für die Behandlungsmitteleinrichtung liefert. So kann beispielsweise eine Kamera zur Erfassung der Schnittfläche eines jeweiligen momentan aufgeschnittenen Produktes ausschließlich dazu dienen, Informationen über die Größe und/oder die Orientierung der Schnittfläche zu liefern, um in Abhängigkeit davon die Bereitstellung von Behandlungsmittel zu steuern.

Wie ebenfalls an anderer Stelle bereits erwähnt, kann bei dem erfindungsgemäßen Verfahren vorgesehen sein, dass das Behandlungsmittel auf eine jeweilige Schnittfläche eines Produktes, das momentan aufgeschnitten wird, oder auf eine jeweilige Flachseite einer fallenden oder liegenden Scheibe aufgebracht wird.

Vorstehend wurden bereits einige mögliche Anwendungen und Einsatzmöglichkeiten der Erfindung erläutert. Weitere Nutzungsmöglichkeiten werden nachstehend offenbart, wobei für den Fachmann klar ist, dass einige oder alle der hierin offenbarten Einsatzmöglichkeiten entweder gleichzeitig oder zeitlich nacheinander in einem jeweiligen Schneidebetrieb zur Anwendung kommen können.

Mit der Erfindung ist es insbesondere möglich, dass bei Erkennen eines Produktanfangs oder eines Produktendes von der Bereitstellung des Behandlungsmittels abgesehen wird. Alternativ kann zu diesen Zeitpunkten die Behandlungsmitteleinrichtung jeweils getestet oder gespült werden.

Alternativ zu einer zielgerichteten Abgabe von Behandlungsmittel ist es grundsätzlich auch möglich, in einem bestimmten Bereich der Aufschneidevorrichtung ein Aerosol zu erzeugen, d.h. einen Nebel aus dem Behandlungsmittel, durch den die abgetrennten Scheiben hindurchfallen, um auf diese Weise mit dem Behandlungsmittel versehen zu werden. Ein derartiger Nebel kann beispielsweise in einer Messerschutzhaube der Aufschneidevorrichtung erzeugt werden, wobei die während des Schneidebetriebs erfolgenden Arbeitsbewegungen des Schneidmessers dafür sorgen, dass das Behandlungsmittel in den Bereich der fallenden Scheiben übertragen wird. Alternativ oder zusätzlich könnten im Schneidmesser Kanäle ausgebildet sein, denen Behandlungsmittel zugeführt wird und aus denen während des Schneidebetriebs das Behandlungsmittel abgegeben wird. Hierbei ist es also das Schneidmesser, mit dem das Behandlungsmittel auf die Schnittfläche des Produktes oder auf die abgetrennten Scheiben aufgebracht wird.

Eine vorstehend bereits erwähnte gemeinsame Abgabeeinheit, in die alle Abgabeöffnungen oder zumindest eine Gruppe von Abgabeöffnungen integriert sind bzw. ist, kann beispielsweise als langgestreckter Düsenbalken ausgebildet sein. Eine solche gemeinsame Abgabeeinheit oder eine Mehrzahl von Einzeldüsen können so ausgebildet sein, dass sie beispielsweise werkzeuglos abnehmbar ist bzw. sind, um gereinigt oder ausgewechselt zu werden. Die Abgabeeinheit bzw. Einzeldüsen können beispielsweise an einer Portioniereinheit, an einem Schneidkopfgehäuse oder an einer Messerschutzhaube der Aufschneidevorrichtung befestigt werden. Eine einfache Reinigung und Wartung sind auf diese Weise möglich.

Wie an anderer Stelle bereits erwähnt, kann es sich bei dem Behandlungsmittel beispielsweise um ein Trennmittel oder um ein Schutzmittel handeln. Auch Kombinationen unterschiedlicher Behandlungsmittel sind möglich, d.h. mit der Erfindung kann gleichzeitig das Zusammenkleben der Scheiben verhindert als auch die Haltbarkeit verlängert werden, wenn gleichzeitig Trennmittel und Schutzmittel bereitgestellt werden. Des Weiteren ist es mit der Erfindung alternativ oder zusätzlich möglich, Behandlungsmittel in Form von Aroma-, Geschmacks- und/oder Farbstoffen und/oder in Form von Rauch aufzubringen.

Die Erfindung kann auch in Verbindung mit Interleavern eingesetzt werden, wie sie vorstehend bereits erläutert worden sind. Um für einen derartigen Interleaver keinen Kunststoff für die Materialbahnen einsetzen zu brauchen, kann ein mit umweltfreundlichem Papier arbeitender Interleaver verwendet und die erfindungsgemäße Behandlungsmitteleinrichtung dazu genutzt werden, auf das Interleaverpapier ein flüssiges Trennmittel aufzubringen, beispielsweise durch Aufsprühen. Hierbei wird das Trennmittel folglich nicht unmittelbar auf das Lebensmittel aufgebracht, sondern die Wirkungsweise und/oder Umweltfreundlichkeit eines Interleavers verbessert.

Die gesamte Behandlungsmitteleinrichtung oder einzelne Komponenten davon, beispielsweise Düsen, Vorratsbehälter oder zusätzlich vorgesehene Drucklufteinrichtungen, können temperierbar sein, um eine für die jeweilige Anwendung optimale Viskosität des Behandlungsmittels zu gewährleisten.

Für eine jeweilige Spur kann einer oder mehreren der für diese Spur vorgesehenen Abgabeöffnungen der Behandlungsmitteleinrichtung eine Blende vorgelagert sein, die an die Größe und Orientierung der Schnittfläche des jeweiligen Produktes angepasst ist. Eine solche Blende sorgt dafür, dass über die Abgabeöffnung oder Abgabeöffnungen der betreffenden Spur abgegebenes, beispielsweise versprühtes, Behandlungsmittel ausschließlich auf die Schnittfläche des Produktes trifft. Überschüssiges Behandlungsmittel, das ohne die Blende neben die Schnittfläche gelangen und somit ungenutzt abgegeben werden würde, kann hierdurch mittels der Blende abgefangen werden und an der Blende ablaufen, um aufgefangen und einer Wiederverwendung zugeführt zu werden.

Nachstehend werden weitere mögliche Ausführungsformen der Erfindung erwähnt, und zwar sowohl der erfindungsgemäßen Vorrichtung als auch des erfindungsgemäßen Verfahrens. Diese Ausführungsformen können beliebig miteinander und mit an anderer Stelle hierin offenbarten Ausführungsformen kombiniert werden.

Es können zum Bereitstellen des Behandlungsmittels Mehrkomponenten-Düsen vorgesehen sein, wobei zumindest eine der Düsen zum Ausstoßen von Luft dient, um über zumindest eine der anderen Düsen bereitgestelltes Behandlungsmittel zu zerstäuben. Dabei kann vorgesehen sein, dass die Steuereinheit mit den Signalen für das Ansteuern der Behandlungsmittel-Düsen auch die Luftdüsen ansteuert, wobei insbesondere die Steuereinheit die Luftdüsen zeitlich synchronisiert mit den Düsen für das Behandlungsmittel ansteuert.

Die Aufschneidevorrichtung kann dazu ausgebildet sein, die Behandlungsmitteleinrichtung zu überwachen, z.B. hinsichtlich eines Füllstandes des Behandlungsmittels, zum Beispiel in dem Behandlungsmittelvorrat, hinsichtlich eines Durchflusses des Behandlungsmittels durch eine oder mehrer Behandlungsmittelleitungen, und/oder des Auftretens von das Behandlungsmittel betreffenden Leckagen oder anderen Störungen wie z.B. Verstopfungen in den Leitungen. Die Überwachung erfolgt insbesondere mittels der Steuereinheit. Hierzu kann beispielsweise in einer Behandlungsmittelleitung ein Drucksensor vorgesehen sein, der ein Signal liefert, aus dessen zeitlichen Verlauf Druckunterschiede in der Leitung bestimmt werden können. Diese Druckunterschiede ermöglichen Rückschlüsse auf einen ordnungsgemäßen Durchfluss an sich, auf die pro Zeiteinheit durch die Leitung strömende Menge an Behandlungsmittel, also auf die Durchflussmenge, oder auf eventuell vorhandene Störungen. Eine Überwachung kann alternativ oder zusätzlich mittels eines kapazitiven Sensors an der das Behandlungsmittel führenden Leitung erfolgen. Mit einem solchen Sensor können unterschiedliche Behandlungsmittel und auch allgemein unterschiedliche Medien in der jeweiligen Leitung erkannt werden, d.h. es können Wechsel des Behandlungsmittels detektiert werden. Wird z.B. das Vorhandensein von Öl detektiert, kann auf einen ordnungsgemäßen Zustand mit noch ausreichend gefülltem Ölvorratsbehälter geschlossen werden. Wird dagegen das Vorhandensein von Luft detektiert, kann die Steuereinheit darauf schließen, dass der Vorratsbehälter leer ist. Rückschlüsse auf einen ordnungsgemäßen Durchfluss in einer Behandlungsmittelleitung an sich, auf die pro Zeiteinheit durch die Leitung strömende Menge an Behandlungsmittel oder auf eventuell vorhandene Störungen können auch mithilfe eines Indikationselementes, z.B. einer Kugel, gezogen werden, das sich in der das Behandlungsmittel führenden Leitung befindet und in dem Behandlungsmittel schwebt und dessen Position durch eine geeignete Detektionseinrichtung abgefragt werden kann - z.B. im Rahmen einer Zweipunktabfrage bzw. Zweipunktregelung oder einer analogen Positionsabfrage.

Was die Richtung einer Abgabe von Behandlungsmittel durch die Behandlungsmitteleinrichtung anbetrifft, so können unterschiedliche Einrichtungen zum Einstellen oder Ausrichten vorgesehen sein. Eine Ausrichtung kann zum Beispiel automatisch erfolgen. Es ist alternativ oder zusätzlich möglich, einen Laserpointer oder eine andere Einstellhilfe zu verwenden, mit der ein jeweils gewünschter "Zielbereich" markiert werden kann, um dann zum Beispiel eine automatische oder manuelle Ausrichtung beispielsweise von Abgabedüsen für das Behandlungsmittel unter Verwendung der sichtbaren oder anderweitig detektierbaren Markierung durchzuführen.

Für einen Vorratsbehälter für das Behandlungsmittel kann ein Schnellwechselsystem vorgesehen sein, um einen Behälterwechsel zu erleichtern und um die Rüstzeiten zu verkürzen.

Einige oder alle Funktionen der Steuereinheit für die Behandlungsmitteleinrichtung können in die Steuereinrichtung eingebunden sein, die den Schneidebetrieb und somit auch die Aufschneidevorrichtung steuert. Hierdurch kann erreicht werden, dass an einer Schnittstelle der Steuereinrichtung alle auch für die Steuerung der Behandlungsmitteleinrichtung erforderlichen Funktionalitäten vorhanden sind. Mit anderen Worten ist die Aufschneidevorrichtung an ihrer Schnittstelle unabhängig von einer jeweiligen konkreten Anbindung einer Behandlungsmitteleinrichtung.

Es kann eine Reinigungseinrichtung vorgesehen sein, die dazu ausgebildet ist, im Rahmen einer Reinigungsfunktion vorgegebene Komponenten der Behandlungsmitteleinrichtung, beispielsweise Schläuche und Düsen für das Behandlungsmittel, zu spülen und/oder zu desinfizieren. Es kann vorgesehen sein, dass diese Reinigungsfunktion an der Steuereinrichtung der Aufschneidevorrichtung auswählbar ist. Für ein bei dieser Reinigung zu verwendendes Reinigungsmedien kann ein Behälter vorgesehen sein, der entweder permanent vorhanden und an die Behandlungsmitteleinrichtung angeschlossen ist, so dass lediglich mittels der Steuereinrichtung zum Reinigen auf diesen Reinigungsmedium-Behälter umgeschaltet werden kann, oder der anstelle des Behandlungsmittelvorrats installiert und zum Reinigen an die Behandlungsmitteleinrichtung angeschlossen wird, d.h. ein Behälter für das Behandlungsmittel wird vorübergehend für einen Reinigungsvorgang gegen den Reinigungsmedium-Behälter getauscht.

Wie auch nachstehend in Verbindung mit einem möglichen Ausführungsbeispiel erläutert, kann generell vorgesehen sein, dass das Bereitstellen des Behandlungsmittels - insbesondere ein Abgeben durch Ausstoßen oder Versprühen - hinsichtlich der Richtung eingestellt werden kann, und zwar in Abhängigkeit von der Position und/oder der Größe und/oder der Orientierung der Schnittfläche eines jeweiligen aufzuschneidenden Produktes oder in Abhängigkeit von der Position und/oder der Größe und/oder der Orientierung der Flachseite einer jeweiligen abgetrennten Scheibe. Abgabeöffnungen, die z.B. jeweils von einer Düse gebildet sind, können für eine jeweilige Anwendung gezielt derart ausgerichtet werden, dass gewährleistet ist, dass das Behandlungsmittel zumindest zum ganz überwiegenden Teil nur auf die Schnittfläche bzw. Flachseite gelangt und nicht daran vorbei ausgestoßen oder versprüht wird. Die Behandlungsmitteleinrichtung erlaubt so eine flexible Anpassung an eine jeweilige Anwendung und insbesondere an das jeweils aufzuschneidende Produkt. Das Ausrichten der Düsen kann manuell oder gesteuert erfolgen. Nicht nur die Ausrichtung, auch die Anzahl der Düsen pro Spur kann variiert und so gezielt an die jeweilige Anwendung angepasst werden. Mehrere Düsen können also bedarfsweise steuerungstechnisch zusammengefasst werden, um das Behandlungsmittel gemeinsam in einer Spur auf die Schnittfläche des Produkts bzw. auf die Flachseiten der Scheiben aufzubringen.

Ferner kann vorgesehen sein, dass - zum Beispiel einmalig, stichprobenartig oder im Rahmen einer permanenten automatischen Regelung - eine Überprüfung des Aufbringens des Behandlungsmittels auf die Schnittfläche und/oder Flachseite durchgeführt wird, und zwar dahingehend, welcher Teil der Schnittfläche bzw. Flachseite tatsächlich bei einer jeweiligen Einstellung der Behandlungsmitteleinrichtung, insbesondere einer Einstellung hinsichtlich Aufbringrichtung und/oder Aufbringmenge des Behandlungsmittels, mit dem Behandlungsmittel versehen ist. Es kann also überprüft werden, ob das Behandlungsmittel auf die gesamte Schnittfläche bzw. Flachseite oder nur auf einen Teil davon aufgebracht wird. Die Einstellung der Behandlungsmitteleinrichtung kann dann erforderlichenfalls geändert werden, wenn das Ergebnis der Überprüfung nicht dem jeweils gewünschten Ziel des Aufbringens des Behandlungsmittels entspricht. Die Überprüfung und die gegebenenfalls durchgeführte Änderung der Einstellung können vollautomatisch erfolgen. Die Überprüfung kann beispielsweise durch optische Sensoren erfolgen, zum Beispiel durch eine Kamera oder eine Einrichtung zur Spektralanalyse oder Hyperspektralanalyse, insbesondere mittels einer Hyperspektralkamera.

In manchen Ausführungsformen kann vorgesehen sein, dass die Steuereinheit dazu in der Lage ist, beim Aufbringen von Behandlungsmittel zu unterscheiden zwischen der ersten Scheibe einer mehrere Scheiben umfassenden Portion und den weiteren Scheiben dieser Portion, und bei der ersten Scheibe das Aufbringen von Behandlungsmittel anders durchzuführen, z.B. eine geringere Menge an Behandlungsmittel einzusetzen, als bei den weiteren Scheiben. Wenn beispielsweise eine Auflagefläche im Portionierbereich, auf welche die abgetrennten Scheiben fallen, eine bestimmte Eigenschaft besitzt, die für eine bestimmte Menge an Behandlungsmittel kritisch ist, dann kann für die erste Scheibe - und nur für diese erste Scheibe - der Portion, wenn diese erste Scheibe mit derjenigen Flachseite auf der Auflagefläche zu liegen kommt, die mit dem Behandlungsmittel versehen wird, eine geringere oder eine höhere Menge an Behandlungsmittel vorgesehen werden, je nachdem, welche Menge in Verbindung mit der bestimmten Eigenschaft der Auflagefläche besser ist. Wenn das Behandlungsmittel z.B. ein Öl ist und zwischen der Auflagefläche und der mit einer für die Scheiben vorgegebenen Standardmenge an Öl versehenen Flachseite der ersten Scheibe ein zu starker Schlupf entstehen würde, dann kann für die erste Scheibe eine geringere Ölmenge vorgegeben oder die erste Scheibe überhaupt nicht mit dem Behandlungsmittel versehen werden. Dies kann durch die Steuereinheit automatisch veranlasst werden, wenn diese die entsprechende Information als einen Teil der Betriebsinformationen erhält.

Die vorstehend erläuterten Einsatzmöglichkeiten stellen jeweils unabhängige Aspekte der Erfindung dar, für die auch jeweils unabhängig von anderen Aspekten Schutz beansprucht wird.

Die Erfindung wird im Folgenden beispielhaft unter Bezugnahme auf die Zeichnung beschrieben. Es zeigen:
- Fig. 1: schematisch eine erfindungsgemäße Aufschneidevorrichtung in einer Seitenansicht, und
- Fig. 2: schematisch in einer Draufsicht einen Teil der Aufschneidevorrichtung von Fig. 1.

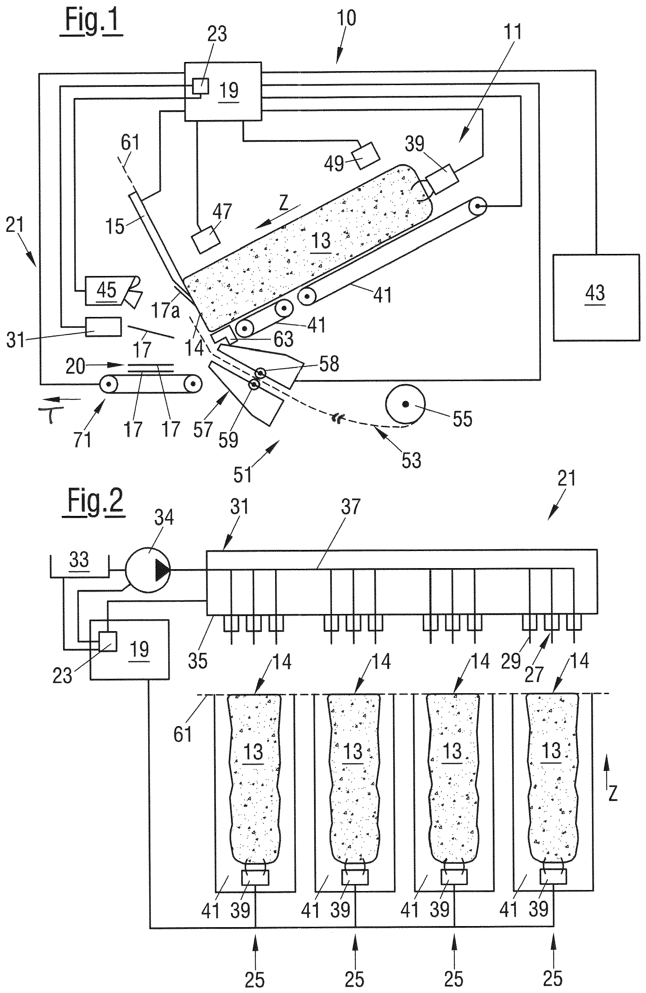

Bei der in den Fig. 1 und 2 dargestellten Aufschneidevorrichtung handelt es sich um einen Hochleistungsslicer, der mit einem beispielsweise als Sichelmesser ausgebildeten Schneidmesser 15 gleichzeitig vier nebeneinanderliegende Produkte 13 aufschneiden kann. Für jedes Produkt 13 ist ein auch als Produktgreifer bezeichneter Produkthalter 39 vorgesehen, der während eines Schneidebetriebs in das hintere Produktende eingreift. Die aufzuschneidenden Produkte 13 liegen jeweils auf einer Produktauflage auf, die von zwei in einer Zufuhrrichtung Z aufeinanderfolgenden Transportbändern 41 - einem langen hinteren und einem kurzen vorderen - gebildet werden und die der Einfachheit halber in Fig. 2 nicht einzeln dargestellt sind. Anstelle der beiden aufeinanderfolgenden Transportbänder 41 kann die Produktauflage alternativ von einem einzigen Transportband oder von einer passiven Gleitfläche gebildet werden. Zusätzlich kann die die Produkthalter 39 und die Transportbänder 41 bildende Produktzufuhr 11 der auch einfach als Slicer bezeichneten Aufschneidevorrichtung 10 für jedes Produkt 13 ein oberes Transportband oder eine andere Transporteinrichtung aufweisen.

Die einzelnen Komponenten der Produktzufuhr 11 sind mit einer zentralen Steuerung 19 des Slicers 10 verbunden, wie dies durch die einzelnen Linien in Fig. 1 und Fig. 2 angedeutet ist. Die zentrale Steuereinrichtung 19 wird im Folgenden auch einfach als Slicersteuerung bezeichnet.

Die Schneide des Sichelmessers 15 definiert eine Schneidebene 61, in der das Messer 15 von den Produkten 13 während des Schneidebetriebs nacheinander Scheiben 17 abtrennt. In einem Arbeitstakt des Slicers 10, also pro Umdrehung des Sichelmessers 61 um eine hier nicht dargestellte Messerachse, wird von jedem Produkt 13 jeweils eine Scheibe 17 abgetrennt.

Fig. 1 zeigt eine im Entstehen befindliche Scheibe 17a, die noch nicht vollständig von dem Produkt 13 abgetrennt ist, eine fallende Scheibe 17, die zuvor von dem Produkt 13 abgetrennt worden ist, und eine im Portionierbereich auf einem Portionierband 71 aufliegende Portion 20 aus mehreren übereinanderliegenden Scheiben 17, die zuvor von dem Produkt 13 abgetrennt worden sind. Während des Schneidebetriebs fallen also von dem jeweiligen Produkt 13 abgetrennte Scheiben 17 nach unten und bilden auf dem Portionierband eine Portion 20 aus mehreren übereinander liegenden Scheiben 17. Das Portionierband 71 dient dazu, eine jeweilige fertige Portion 20, die vorgegebene Bedingungen wie insbesondere eine bestimmte Anzahl von Scheiben 17 oder ein bestimmtes Portionsgewicht erfüllt, in einer Abtransportrichtung T abzutransportieren, woraufhin das Portionierband 71 wieder für die Bildung der nächsten Portion frei ist. Während eines solchen Abtransports einer fertigen Portion befindet sich der Slicer 10 in einem sogenannten Leerschnittbetrieb, in welchem das Messer 15 weiterhin mit der Betriebsgeschwindigkeit rotiert, aber von dem Produkt 13 keine Scheiben 17 abtrennt, da die Produktzufuhr 11 während der Durchführung dieser Leerschnitte nicht aktiv ist, d.h. das jeweilige Produkt 13 nicht in Zufuhrrichtung Z fördert. Alternativ oder zusätzlich zu einem solchen Stopp der Produktzufuhr 11 kann das Messer 15 zur Ausführung von Leerschnitten aus der Schneidebene 61 heraus von der Schnittfläche 14 des Produkts 13 wegbewegt werden. Das Konzept eines Leerschnittbetriebs ist dem Fachmann grundsätzlich bekannt, weshalb hierauf nicht näher eingegangen zu werden braucht.

Der Schneidebetrieb einschließlich der Ausführung von Leerschnitten, der Ansteuerung eines nachstehend näher beschriebenen Interleavers 51 sowie weiterer Abläufe während des Schneidebetriebs, auf die nachstehend ebenfalls näher eingegangen wird, wird von der zentralen Slicersteuerung 19 gesteuert. Alle diesbezüglichen Betriebsinformationen stehen an der Steuereinrichtung 19 zur Verfügung.

Zum Abtrennen der Scheiben 17 von einem jeweiligen Produkt 13 wirkt das Messer 15 mit einer Schneidkante 63 zusammen, die den Abschluss der Produktauflage der Produktzufuhr 11 bildet. Unterhalb der Schneidkante 63 befindet sich die Mündung einer Ausgabeeinrichtung 57 des bereits erwähnten Interleavers 51, der dazu dient, im Schneidbereich des Slicers 10 sogenanntes Zwischenblattmaterial bereitzustellen. Das Zwischenblattmaterial, das als Materialbahn 53 von einem als Materialrolle vorliegenden Materialvorrat 55 während des Betriebs des Interleavers 51 in grundsätzlich bekannter Weise abgenommen wird, wird derart in den Schneidbereich eingebracht und jeweils als Zwischenblatt mittels des Messers 15 von der Materialbahn 53 abgetrennt, dass zwischen aufeinanderfolgenden Scheiben 17 ein Zwischenblatt vorhanden ist. Die Ausgabe des Zwischenblattmaterials in den Schneidbereich über die Ausgabeeinrichtung 57 erfolgt beispielsweise durch eine angetriebene Vorschubwalze 58, die mit einer Andrückrolle 59 zusammenwirkt.

Der Interleaver 51 ist ebenfalls für einen mehrspurigen Betrieb ausgebildet, d.h. er kann das Zwischenblattmaterial mehrspurig und insbesondere spurindividuell bereitstellen.

Eine erfindungsgemäße Behandlungsmitteleinrichtung, die nachstehend näher beschrieben wird, kann eine der im Einleitungsteil erwähnten Zusatzfunktionen erfüllen, und zwar grundsätzlich unabhängig von dem Zweck des Interleavers 51. Die Behandlungsmitteleinrichtung 21 kann den Interleaver 51 ergänzen oder die Behandlungsmitteleinrichtung 21 kann den Interleaver 51 auch ersetzen, d.h. in einigen Ausführungsbeispielen einer erfindungsgemäße Aufschneidevorrichtung ist kein Interleaver vorhanden, da die Funktion der Zwischenblätter, nämlich ein Zusammenkleben aufeinanderliegender Scheiben 17 in einer Portion 20 zu verhindern, von der Behandlungsmitteleinrichtung 21 erfüllt wird.

Wie ebenfalls im Einleitungsteil bereits erwähnt, kann eine Ergänzung des Interleavers 51 durch eine erfindungsgemäße Behandlungsmitteleinrichtung 21 dadurch erfolgen, dass ein geeignetes Behandlungsmittel auf das Zwischenblattmaterial aufgebracht wird, um beispielsweise einem Zwischenblattmaterial, das für sich genommen nur eine geringe Trennwirkung aufweist, derart zu behandeln, dass die Trennwirkung erhöht wird. Einem eine geringe Trennwirkung aufweisenden Papier beispielsweise kann so die deutlich höhere Trennwirkung von herkömmlicher Weise von Interleavern eingesetzten Folienmaterialen verliehen werden.

Die Behandlungsmitteleinrichtung 21 umfasst in dem dargestellten Ausführungsbeispiel eine langgestreckte Abgabeeinheit 31 (vgl. auch Fig. 2), die sich quer zur Zufuhrrichtung Z über alle vier Spuren 25 des Slicers 10 hinweg erstreckt. An einem langgestreckten Träger 35 der Abgabeeinheit 31 sind in Erstreckungsrichtung verteilt mehrere Düsen angebracht, von denen in Fig. 2 der Einfachheit halber nur eine mit dem Bezugszeichen 29 versehen ist. Das vordere Ende einer jeweiligen Düse 29 bildet eine Abgabeöffnung 27, aus der ein Behandlungsmittel beispielsweise versprüht oder als Folge einzelner, fliegender Flüssigkeitsmengen abgegeben werden kann.

Die in Fig. 2 schematisch dargestellte Zufuhr des Behandlungsmittels zu den Düsen 29 erfolgt z.B. über eine Zufuhrleitung 37, die in oder an der Abgabeeinheit 31 verläuft und von der einzelne Leitungsabschnitte abzweigen, die zu den Düsen 29 führen. Es können hier nicht dargestellte, ansteuerbare Ventile vorgesehen sein, die einzeln oder gruppenweise angesteuert werden können, um die Abgabe von Behandlungsmittel für die Düsen 29 einzeln oder gruppenweise zu steuern, d.h. gezielt freizugeben oder zu unterbinden. Im lediglich beispielhaft dargestellten Ausführungsbeispiel der Fig. 2 ist jeder Spur 25 eine Gruppe von drei Düsen 29 zugeordnet. In Abhängigkeit von der Größe und/oder der Orientierung der Schnittfläche 14 eines jeweiligen Produktes 13 kann die Anzahl der aktiven Düsen pro Spur 25 variiert und so gezielt an die jeweilige Anwendung angepasst werden. Außerdem kann es möglich sein, die Düsen manuell oder gesteuert auszurichten, um auf diese Weise für jede Düse 29 die Abgaberichtung des Behandlungsmittels gezielt einstellen zu können.

Die Zufuhrleitung 37 der Abgabeeinheit 31 ist an einen als Behandlungsmittelvorrat 33 dienenden Behälter angeschlossen, und zwar unter Zwischenschaltung einer ansteuerbaren Pumpe 34, mittels welcher das Behandlungsmittel von dem Vorrat 33 zu den Düsen 29 gefördert wird.

Für die Steuerung der Behandlungsmitteleinrichtung 21 während des Schneidebetriebs des Slicers 10 ist eine Steuereinheit 23 vorgesehen, die in Fig. 1 und 2 jeweils schematisch als separate Einheit dargestellt ist. Die Steuereinheit 23 kann eine physisch und/oder funktionell separate Einheit der Slicersteuerung 19 bilden und insofern in diese integriert sein. Die Steuereinheit 23 kann beispielsweise ein Hardware- und/oder ein Softwaremodul beispielsweise im Sinne einer separaten Applikation innerhalb der Steuereinrichtung 19 darstellen. Alternativ ist es auch möglich, die Steuereinheit 23 für die Behandlungsmitteleinrichtung 21 räumlich getrennt von der Slicersteuerung 19 vorzusehen und drahtlos oder drahtgebunden mit der Steuereinrichtung 29 zu verbinden. Wie Fig. 2zeigt, ist die Steuereinheit 23 unter anderem mit dem Vorrat 33, um z.B. die jeweils noch darin vorhandene Behandlungsmittelmenge zu messen, mit der Pumpe 34, um z.B. die pro Zeiteinheit der Abgabeeinheit 31 zuzuführende Menge an Behandlungsmittel zu steuern, und mit der Abgabeeinheit 31 verbunden, um den Betrieb der Düsen 29 zu steuern.

Die Steuerung der Behandlungsmitteleinrichtung 21 durch die Steuereinheit 23 erfolgt nicht unabhängig, sondern in Abhängigkeit von dem Schneidebetrieb des Slicers 10 auf der Basis von Betriebsinformationen der Slicersteuerung 19, und zwar von Betriebsinformationen, die den Schneidebetrieb des Slicers 10 betreffen.

Auf diese Abhängigkeit der Behandlungsmitteleinrichtung 21 von der Slicersteuerung 19 wurde im Einleitungsteil bereits näher eingegangen. Als ein Beispiel sei an dieser Stelle nochmals der Leerschnittbetrieb erwähnt: Während des Abtrennens von Scheiben 17 kann die Abgabeeinheit 31 der Behandlungsmitteleinrichtung 21 beispielsweise derart gesteuert werden, dass in jedem Arbeitstakt eine vorgegebene Menge an Behandlungsmittel - je nach Ausrichtung der Düse 29 oder der Gruppe von Düsen 29 - auf die Schnittfläche 14 des jeweiligen Produktes 13, auf eine der Flachseiten einer fallenden Scheibe 17 oder auf die Oberseite der jeweils ganz oben liegenden Scheibe 17 einer Portion 20 gesprüht oder als fliegende Flüssigkeitsmenge ausgestoßen wird. Während eines Leerschnittbetriebs, in welchem keine Scheiben 17 abgetrennt werden, sorgt die mit dieser Leerschnittbetriebsinformation versorgte Steuereinheit 23 dafür, dass während der Leerschnittphase kein Behandlungsmittel ausgegeben wird, da dies mangels entstehender Scheiben 17 schlichtweg nicht notwendig ist und anderenfalls eine Verschwendung von Behandlungsmittel und eine unnötige Verschmutzung des Slicers 10 bedeuten würde.

Wie ebenfalls bereits im Einleitungsteil erläutert, kann die Abgabe von Behandlungsmittel in Abhängigkeit von verschiedenen Sensoren 45, 47, 49 und 43 erfolgen.

Der Sensor 43 ist dem Slicer 10 vorgelagert und kann von einem Produktscanner gebildet werden, der einen Bestandteil des Slicers 10 bilden oder eine separate Vorrichtung sein kann. Der Scanner 43 dient beispielsweise dazu, die äußere Produktkontur zu bestimmen, um der Slicersteuerung 19 Informationen über den Verlauf des Produktquerschnitts zu liefern und so die Produktzufuhr 11 entsprechend anzusteuern. Eine derartige Steuerung der Produktzufuhr ist dem Fachmann grundsätzlich bekannt. Die Slicersteuerung 19 verfügt folglich über Informationen betreffend die Größe und/oder die Orientierung der momentanen Schnittfläche 14 für jeden Arbeitstakt des Slicers 10. Diese Information kann über die Steuereinheit 23 von der Behandlungsmitteleinrichtung 21 genutzt werden, um beispielsweise in Abhängigkeit von der Größe der Schnittfläche 14 die Abgabemenge des Behandlungsmittels pro Sprüh- oder Ausstoßvorgang entsprechend anzupassen.

Zusätzlich zu einem solchen integrierten oder separaten Scanner 43 können in den Slicer 10 integrierte Sensoren 45, 47, 49 vorgesehen sein. Die Sensoren 47 und 49 dienen dazu, den Produktanfang und das Produktende zu erkennen. Anstelle der zwei Sensoren 47, 49 kann auch nur ein einziger Sensor vorgesehen sein, der sowohl den Produktanfang als auch das Produktende erkennen kann. Diese Informationen können ebenfalls von der Steuereinheit 23 der Behandlungsmitteleinrichtung 21 genutzt werden, um dafür zu sorgen, dass das Behandlungsmittel nur dann abgegeben wird, wenn es auch tatsächlich benötigt wird.

Des Weiteren ist in dem dargestellten Ausführungsbeispiel der Slicer 10 auf derjenigen Seite der Schneidebene 61, auf der auch die Behandlungsmitteleinrichtung 21 angeordnet ist, mit einem Sensor 45 versehen, der die Schnittfläche 14 der Produkte 13 erfassen kann. Dieser Sensor 45 kann beispielsweise mit einer Lichtquelle und einer Kamera versehen sein. Ein derartiger Sensor 45 kann beispielsweise ebenfalls dazu dienen, die Größe und/oder die Ausrichtung der Schnittfläche 14 zu bestimmen, und zwar zum Beispiel in Fällen, in denen kein Scanner 43 vorhanden ist. Alternativ kann ein solcher Sensor 45 auch die von einem Scanner 43 gelieferten Informationen ergänzen. Ein solcher Sensor 45 kann aber auch andere Informationen liefern, beispielsweise Informationen über die Verteilung unterschiedlicher Produktanteile wie beispielsweise Fett einerseits und Magerfleisch andererseits an der jeweiligen Schnittfläche 14. Diese von dem Sensor 45 gelieferten Informationen können von der Steuereinheit 23 der Behandlungsmitteleinrichtung 21 oder von der Slicersteuerung 19 verarbeitet und ebenfalls dazu benutzt werden, den Betrieb der Behandlungsmitteleinrichtung 21 zu steuern.

In dem Ausführungsbeispiel der Fig. 1 und 2 ist vorgesehen, dass der Sensor 45 direkt mit der Steuereinheit 23 der Behandlungsmitteleinrichtung 21 verbunden ist, um so zu veranschaulichen, dass die Behandlungsmitteleinrichtung 21 auch über eigene Einrichtungen - wie hier den Sensor 45 - verfügen kann, um den Schneidebetrieb betreffende Informationen zu beschaffen. Dies schließt freilich nicht aus, dass die Messwerte des Sensors 45 auch von der Slicersteuerung 19 für andere Zwecke als den Betrieb der Behandlungsmitteleinrichtung 21 genutzt werden können.

### Bezugszeichenliste

- 10: Aufschneidevorrichtung
- 11: Produktzufuhr
- 13: Produkt
- 14: Schnittfläche eines Produktes
- 15: Schneidmesser
- 17: Scheibe
- 17a: entstehende Scheibe
- 19: Steuereinrichtung
- 20: Portion
- 21: Behandlungsmitteleinrichtung
- 23: Steuereinheit
- 25: Spur
- 27: Abgabeöffnung
- 29: Düse
- 31: Abgabeeinheit
- 33: Behandlungsmittelvorrat
- 34: Pumpe
- 35: Träger der Abgabeeinheit
- 37: Zufuhrleitung
- 39: Produkthalter
- 41: Produkttransportband
- 43: Sensor
- 45: Sensor
- 47: Sensor
- 49: Sensor
- 51: Interleaver
- 53: Materialbahn
- 55: Materialvorrat
- 57: Ausgabeeinrichtung
- 58: Vorschubwalze
- 59: Andrückrolle
- 61: Schneidebene
- 63: Schneidkante
- 71: Portionierband

- Z: Zufuhrrichtung
- T: Abtransportrichtung

## Patentansprüche

1. Aufschneidevorrichtung zum Aufschneiden von Lebensmittelprodukten, insbesondere Hochleistungsslicer, mit
einer Produktzufuhr (11), die aufzuschneidende Produkte (13) in einer Zufuhrrichtung (Z) ein- oder mehrspurig einem Schneidbereich zuführt, in dem die Produkte (13) während eines Schneidebetriebs der Aufschneidevorrichtung (10) mittels eines Schneidebewegungen ausführenden, insbesondere umlaufenden und/oder rotierenden, Schneidmessers (15) in Scheiben (17) geschnitten werden,
einem Portionierbereich, in dem aus den Scheiben (17) Portionen (20) gebildet werden, die jeweils eine Scheibe (17) oder mehrere zumindest teilweise übereinander liegende Scheiben (17) umfassen, und
einer Steuereinrichtung (19), die den Schneidebetrieb steuert und die über Betriebsinformationen verfügt, die den Schneidebetrieb betreffen,
wobei in die Aufschneidevorrichtung (10) eine Behandlungsmitteleinrichtung (21) zum Bereitstellen eines flüssigen Behandlungsmittels integriert ist, die dazu ausgebildet ist, das Behandlungsmittel während des Schneidebetriebs derart bereitzustellen, dass das Behandlungsmittel auf eine jeweilige Schnittfläche (14) eines Produktes (13) und/oder auf zumindest eine jeweilige Flachseite wenigstens einer Scheibe (17) aufgebracht wird, und
wobei für die Behandlungsmitteleinrichtung (21) eine Steuereinheit (23) vorgesehen ist, die dazu ausgebildet ist, den Betrieb der Behandlungsmitteleinrichtung (21) in Abhängigkeit von dem Schneidebetrieb auf der Basis von zumindest einem Teil der Betriebsinformationen der Steuereinrichtung (19) zu steuern,
insbesondere wobei die Aufschneidevorrichtung (10) gemäß einem Verfahren nach zumindest einem der Ansprüche 9 bis 13 betreibbar ist,
wobei die Behandlungsmitteleinrichtung (21) zumindest eine Abgabeeinheit (31) umfasst, die wenigstens eine Abgabeöffnung (27) aufweist und die mit einem Behandlungsmittelvorrat (33) in Verbindung steht, insbesondere wobei für den Behandlungsmittelvorrat (33) wenigstens ein Behälter vorgesehen ist, der an oder in der Aufschneidevorrichtung (10) angeordnet und insbesondere auswechselbar und/oder nachfüllbar ist,
**dadurch gekennzeichnet,**
**dass** die Abgabeeinheit (31) einen sich quer zur Zufuhrrichtung erstreckenden Träger (35) umfasst, an oder in dem mehrere jeweils eine Abgabeöffnung (27) bildende Düsen (29) und zu den Düsen (29) führende Zufuhrleitungen (37) für das Behandlungsmittel angebracht sind.

2. Aufschneidevorrichtung nach Anspruch 1,
wobei die Behandlungsmitteleinrichtung (21) dazu ausgebildet ist, Behandlungsmittel berührungslos aufzubringen, insbesondere durch berührungslose Dosierung, und/oder
wobei die Behandlungsmitteleinrichtung (21) dazu ausgebildet ist, Behandlungsmittel in Form einzelner, fliegender Flüssigkeitsmengen abzugeben oder Behandlungsmittel zu versprühen.

3. Aufschneidevorrichtung nach Anspruch 1 oder 2,
wobei die Behandlungsmitteleinrichtung (21) dazu ausgebildet ist, Behandlungsmittel zeitlich kontinuierlich oder zeitlich diskontinuierlich, insbesondere in regelmäßigen zeitlichen Abständen, bevorzugt im Takt der Arbeitsbewegungen des Schneidmessers (15), abzugeben.

4. Aufschneidevorrichtung nach einem der vorhergehenden Ansprüche,
wobei die Behandlungsmitteleinrichtung (21) bei einspuriger Produktzufuhr (11) für die eine Spur (25) oder bei mehrspuriger Produktzufuhr (11) für jede Spur (25) wenigstens eine Abgabeöffnung (27) für Behandlungsmittel aufweist, wobei bei mehrspuriger Produktzufuhr (11) die Behandlungsmitteleinrichtung (21) spurindividuell betreibbar ist, insbesondere wobei die Abgabeöffnung (27) von einer Düse (29) gebildet ist.

5. Aufschneidevorrichtung nach Anspruch 4,
wobei die Abgabeöffnung (27) auf den Schneidbereich gerichtet ist oder gerichtet werden kann, um das Behandlungsmittel auf eine jeweilige Schnittfläche (14) eines Produktes (13), das momentan aufgeschnitten wird, aufzubringen, oder wobei die Abgabeöffnung (27) auf einen zwischen dem Schneidbereich und dem Portionierbereich befindlichen Fallbereich der von einem jeweiligen Produkt (13), das momentan aufgeschnitten wird, abgetrennten Scheiben (17), oder auf den Portionierbereich gerichtet ist oder gerichtet werden kann, um das Behandlungsmittel auf eine jeweilige Flachseite einer fallenden oder liegenden Scheibe (17) aufzubringen.

6. Aufschneidevorrichtung nach einem der Ansprüche 1 bis 5,
wobei alle Abgabeöffnungen (27) der Behandlungsmitteleinrichtung (21) oder zumindest eine Gruppe von Abgabeöffnungen (27) der Behandlungsmitteleinrichtung (21) in eine gemeinsame Abgabeeinheit (31) integriert sind, wobei bei mehrspuriger Produktzufuhr (11) die Abgabeeinheit (31) mehreren Spuren (25) zugeordnet ist.

7. Aufschneidevorrichtung nach einem der vorhergehenden Ansprüche,
wobei die Behandlungsmitteleinrichtung (21) bei einspuriger Produktzufuhr (11) für die eine Spur (25) oder bei mehrspuriger Produktzufuhr (11) für zumindest eine Spur (25) mehrere Abgabeöffnungen (27) aufweist, die unabhängig voneinander ansteuerbar sind.

8. Aufschneidevorrichtung nach einem der vorhergehenden Ansprüche,
wobei das Behandlungsmittel mehrere separat bevorratete Komponenten umfasst, die vor oder bei Abgabe durch eine Abgabeöffnung (27) zusammenführbar sind.

9. Verfahren zum Betreiben einer Aufschneidevorrichtung (10) nach einem der vorhergehenden Ansprüche zum Aufschneiden von Lebensmittelprodukten, insbesondere Hochleistungsslicer, mit
einer Produktzufuhr (11), die aufzuschneidende Produkte (13) in einer Zufuhrrichtung (Z) ein- oder mehrspurig einem Schneidbereich zuführt, in dem die Produkte (13) während eines Schneidebetriebs der Aufschneidevorrichtung (10) mittels eines Schneidebewegungen ausführenden, insbesondere umlaufenden und/oder rotierenden, Schneidmessers (15) in Scheiben (17) geschnitten werden,
einem Portionierbereich, in dem aus den Scheiben (17) Portionen (20) gebildet werden, die jeweils eine Scheibe (17) oder mehrere zumindest teilweise übereinander liegende Scheiben (17) umfassen, und
einer Steuereinrichtung (19), die den Schneidebetrieb steuert und die über Betriebsinformationen verfügt, die den Schneidebetrieb betreffen,
wobei in die Aufschneidevorrichtung (10) eine Behandlungsmitteleinrichtung (21) integriert ist, mit der während des Schneidebetriebs ein flüssiges Behandlungsmittel auf eine jeweilige Schnittfläche (14) eines Produktes (13) und/oder auf zumindest eine jeweilige Flachseite wenigstens einer Scheibe (17) aufgebracht wird, und
wobei der Betrieb der Behandlungsmitteleinrichtung (21) auf der Basis von zumindest einem Teil der Betriebsinformationen der Steuereinrichtung (19) gesteuert wird.

10. Verfahren nach Anspruch 9,
wobei die Behandlungsmitteleinrichtung (21) hinsichtlich des Abgabezeitpunktes, insbesondere bezogen auf den Takt der Arbeitsbewegungen des Schneidmessers (15), und/oder hinsichtlich der Abgabemenge und/oder hinsichtlich der Abgaberichtung des Behandlungsmittels gesteuert wird, und/oder
wobei während des Schneidebetriebs der Abgabezeitpunkt und/oder die Abgabemenge und/oder die Abgaberichtung des Behandlungsmittels variiert wird, und/oder
wobei während der Durchführung von Leerschnitten, bei denen das Schneidmesser (15) Schneidebewegungen ausführt, aber von einem jeweiligen Produkt (13) keine Scheiben (17) abtrennt, kein Behandlungsmittel abgegeben wird.

11. Verfahren nach Anspruch 9 oder 10,
wobei während des Schneidebetriebs die Abgabe von Behandlungsmittel zeitlich auf die Arbeitsposition zumindest einer Komponente der Aufschneidevorrichtung abgestimmt wird, insbesondere auf die Winkelposition des umlaufenden oder rotierenden Schneidmessers (15) oder auf die Position einer Zufuhreinrichtung der Produktzufuhr (11) in Zufuhrrichtung (Z), bevorzugt auf die Position eines Produkthalters (39) oder eines Produkttransportbandes (41).

12. Verfahren nach einem der Ansprüche 9 bis 11,
wobei während des Schneidebetriebs die Abgabe von Behandlungsmittel in Abhängigkeit von Messwerten zumindest eines der Aufschneidevorrichtung (10) vorgelagerten Sensors oder zumindest eines in die Aufschneidevorrichtung (10) integrierten Sensors gesteuert wird, insbesondere eines der Aufschneidevorrichtung (10) vorgelagerten Sensors (43) zum Bestimmen der äußeren Kontur und/oder der inneren Struktur eines jeweiligen Produktes (13), oder eines in die Aufschneidevorrichtung (10) integrierten Sensors (45) zur Bestimmung der Größe und/oder der Orientierung einer jeweiligen Schnittfläche (14) eines Produktes (13), das momentan aufgeschnitten wird, oder eines in die Aufschneidevorrichtung (10) integrierten Sensors (47, 49) zum Erkennen des Anfangs und/oder des Endes eines Produktes (13), das aufgeschnitten werden soll oder momentan aufgeschnitten wird.

13. Verfahren nach einem der Ansprüche 9 bis 12,
wobei das Behandlungsmittel auf eine jeweilige Schnittfläche (14) eines Produktes (13), das momentan aufgeschnitten wird, oder auf eine jeweilige Flachseite einer fallenden oder liegenden Scheibe (17) aufgebracht wird.

## Claims

1. A slicing apparatus for slicing food products, in particular a high-performance slicer, comprising
a product feed (11) that feeds products (13) to be sliced on one or more tracks in a feed direction (Z) to a cutting region in which the products (13) are cut into slices (17) during a cutting operation of the slicing apparatus (10) by means of a cutting blade (15), in particular a revolving and/or rotating cutting blade (15), that performs cutting movements;
a portioning region in which portions (20) are formed from the slices (17) and each comprise one slice (17) or a plurality of slices (17) disposed at least partly above one another; and
a control device (19) which controls the cutting operation and which has operating information that relates to the cutting operation,
wherein a treatment agent device (21) for providing a liquid treatment agent is integrated into the slicing apparatus (10) and is configured to provide the treatment agent during the cutting operation such that the treatment agent is applied to a respective cut surface (14) of a product (13) and/or to at least one respective flat side of at least one slice (17), and
wherein a control unit (23) is provided for the treatment agent device (21) and is configured to control the operation of the treatment agent device (21) in dependence on the cutting operation on the basis of at least a portion of the operating information of the control device (19),
in particular wherein the slicing apparatus (10) can be operated in accordance with a method in accordance with at least one of the claims 9 to 13,
wherein the treatment agent device (21) comprises at least one dispensing unit (31) which has at least one dispensing opening (27) and which is in connection with a treatment agent store (33), in particular wherein at least one container, which is arranged at or in the slicing apparatus (10) and which is in particular replaceable and/or refillable, is provided for the treatment agent store (33),
**characterized in that**
the dispensing unit (31) comprises a carrier (35) which extends transversely to the feed direction and at or in which a plurality of nozzles (29), which each form a dispensing opening (27), and feed lines (37), which lead to the nozzles (29), for the treatment agent are attached.

2. A slicing apparatus in accordance with claim 1,
wherein the treatment agent device (21) is configured to apply treatment agent in a contactless manner, in particular by a contactless metering, and/or
wherein the treatment agent device (21) is configured to dispense treatment agent in the form of individual, flying liquid amounts or to spray treatment agent.

3. A slicing apparatus in accordance with claim 1 or 2,
wherein the treatment agent device (21) is configured to dispense treatment agent continuously in time or discontinuously in time, in particular at regular time intervals, preferably in the cycle of the working movements of the cutting blade (15).

4. A slicing apparatus in accordance with any one of the preceding claims, wherein the treatment agent device (21) has at least one dispensing opening (27) for treatment agent for the one track (25) in the case of a single-track product feed (11) or for each track (25) in the case of a multi-track product feed (11), wherein the treatment agent device (21) can be operated individually per track in the case of a multi-track product feed (11), in particular wherein the dispensing opening (27) is formed by a nozzle (29).

5. A slicing apparatus in accordance with claim 4,
wherein the dispensing opening (27) is or can be directed onto the cutting region to apply the treatment agent to a respective cut surface (14) of a product (13) which is currently being sliced, or wherein the dispensing opening (27) is or can be directed onto a falling region, which is located between the cutting region and the portioning region, of the slices (17) cut off from a respective product (13) which is currently being sliced, or the dispensing opening (27) is or can be directed onto the portioning region to apply the treatment agent to a respective flat side of a falling or lying slice (17).

6. A slicing apparatus in accordance with any one of the claims 1 to 5,
wherein all the dispensing openings (27) of the treatment agent device (21) or at least one group of dispensing openings (27) of the treatment agent device (21) are integrated into a common dispensing unit (31), wherein the dispensing unit (31) is associated with a plurality of tracks (25) in the case of a multi-track product feed (11).

7. A slicing apparatus in accordance with any one of the preceding claims, wherein the treatment agent device (21) has a plurality of dispensing openings (27), which are controllable independently of one another, for the one track (25) in the case of a single-track product feed (11) or for at least one track (25) in the case of a multi-track product feed (11).

8. A slicing apparatus in accordance with any one of the preceding claims, wherein the treatment agent comprises a plurality of components which are stocked separately and which can be combined prior to or on the dispensing through a dispensing opening (27).

9. A method of operating a slicing apparatus (10) in accordance with any one of the preceding claims for slicing food products, in particular a high-performance slicer, comprising
a product feed (11) that feeds products (13) to be sliced on one or more tracks in a feed direction (Z) to a cutting region in which the products (13) are cut into slices (17) during a cutting operation of the slicing apparatus (10) by means of a cutting blade (15), in particular a revolving and/or rotating cutting blade (15), that performs cutting movements;
a portioning region in which portions (20) are formed from the slices (17) and each comprise one slice (17) or a plurality of slices (17) disposed at least partly above one another; and
a control device (19) which controls the cutting operation and which has operating information that relates to the cutting operation,
wherein a treatment agent device (21) is integrated into the slicing apparatus (10), by which treatment agent device (21) a liquid treatment agent is applied to a respective cut surface (14) of a product (13) and/or to at least one respective flat side of at least one slice (17) during the cutting operation, and
wherein the operation of the treatment agent device (21) is controlled on the basis of at least a portion of the operating information of the control device (19).

10. A method in accordance with claim 9,
wherein the treatment agent device (21) is controlled with respect to the dispensing time, in particular with respect to the cycle of the working movements of the cutting blade (15), and/or with respect to the dispensing amount, and/or with respect to the dispensing direction of the treatment agent, and/or
wherein the dispensing time, and/or the dispensing amount, and/or the dispensing direction of the treatment agent is/are varied during the cutting operation, and/or
wherein no treatment agent is dispensed during the carrying out of blank cuts for which the cutting blade (15) performs cutting movements, but no slices (17) are cut off from a respective product (13).

11. A method in accordance with claim 9 or 10,
wherein, during the cutting operation, the dispensing of treatment agent is coordinated in time with the working position of at least one component of the slicing apparatus, in particular with the angular position of the revolving or rotating cutting blade (15) or with the position of a feed device of the product feed (11) in the feed direction (Z), preferably with the position of a product holder (39) or of a product transport belt (41).

12. A method in accordance with any one of the claims 9 to 11,
wherein, during the cutting operation, the dispensing of treatment agent is controlled in dependence on measured values of at least one sensor arranged upstream of the slicing apparatus (10) or of at least one sensor integrated into the slicing apparatus (10), in particular of a sensor (43) arranged upstream of the slicing apparatus (10) for determining the outer contour and/or the inner structure of a respective product (13), or of a sensor (45) integrated into the slicing apparatus (10) for determining the size and/or the orientation of a respective cut surface (14) of a product (13) which is currently being sliced, or of a sensor (47, 49) integrated into the slicing apparatus (10) for recognizing the start and/or the end of a product (13) which is to be sliced or is currently being sliced.

13. A method in accordance with any one of the claims 9 to 12,
wherein the treatment agent is applied to a respective cut surface (14) of a product (13) which is currently being sliced or to a respective flat side of a falling or lying slice (17).

## Revendications

1. Dispositif de tranchage pour trancher des produits alimentaires, en particulier trancheuse à haute performance, comprenant
une alimentation en produits (11) qui achemine les produits à trancher (13) dans une direction d'alimentation (Z) sur une ou plusieurs voies vers une zone de découpe dans laquelle les produits (13) sont découpés en tranches (17) pendant une opération de découpe du dispositif de tranchage (10) au moyen d'une lame de découpe (15) effectuant des mouvements de découpe, en particulier en révolution et/ou en rotation,
une zone de mise en portions dans laquelle les tranches (17) sont mises en portions (20) qui comprennent chacune une tranche (17) ou plusieurs tranches (17) au moins partiellement superposées, et
un dispositif de commande (19) qui commande l'opération de découpe et qui dispose d'informations de fonctionnement concernant l'opération de découpe,
dans lequel
un dispositif d'application d'agent de traitement (21) destiné à fournir un agent de traitement liquide est intégré dans le dispositif de tranchage (10), lequel dispositif est conçu pour fournir l'agent de traitement pendant l'opération de découpe de telle sorte que l'agent de traitement soit appliqué sur une surface de coupe respective (14) d'un produit (13) et/ou sur au moins une face plate respective d'au moins une tranche (17), et
une unité de commande (23) est prévue pour le dispositif d'application d'agent de traitement (21), laquelle est conçue pour commander le fonctionnement du dispositif d'application d'agent de traitement (21) en fonction de l'opération de découpe en se basant sur au moins une partie des informations de fonctionnement du dispositif de commande (19),
en particulier, le dispositif de tranchage (10) est apte à fonctionner conformément à un procédé selon l'une au moins des revendications 9 à 13, le dispositif d'application d'agent de traitement (21) comprend au moins une unité de distribution (31) qui présente au moins une ouverture de distribution (27) et qui est en communication avec une réserve d'agent de traitement (33),
en particulier, au moins un récipient est prévu pour la réserve d'agent de traitement (33), lequel est disposé sur ou dans le dispositif de tranchage (10) et est en particulier interchangeable et/ou rechargeable, **caractérisé en ce que**
l'unité de distribution (31) comprend un support (35) s'étendant transversalement à la direction d'alimentation, sur ou dans lequel sont montées plusieurs buses (29), formant chacune une ouverture de distribution (27), et des conduites (37) d'alimentation en agent de traitement menant aux buses (29).

2. Dispositif de tranchage selon la revendication 1,
dans lequel le dispositif d'application d'agent de traitement (21) est conçu pour appliquer l'agent de traitement sans contact physique, en particulier par dosage sans contact physique, et/ou
le dispositif d'application d'agent de traitement (21) est conçu pour distribuer l'agent de traitement sous forme de quantités individuelles de liquide volant ou pour pulvériser l'agent de traitement.

3. Dispositif de tranchage selon la revendication 1 ou 2,
dans lequel le dispositif d'application d'agent de traitement (21) est conçu pour distribuer l'agent de traitement de manière continue ou discontinue dans le temps, en particulier à des intervalles de temps réguliers, de préférence au rythme des mouvements de travail de la lame de découpe (15).

4. Dispositif de tranchage selon l'une des revendications précédentes,
dans lequel le dispositif d'application d'agent de traitement (21) présente, dans le cas d'une alimentation en produits (11) à une seule voie, au moins une ouverture de distribution (27) de l'agent de traitement pour ladite voie (25) ou, dans le cas d'une alimentation en produits (11) à plusieurs voies, au moins une dite ouverture de distribution pour chaque voie (25), et dans le cas d'une alimentation en produits (11) à plusieurs voies, le dispositif d'application d'agent de traitement (21) peut être actionné individuellement pour chaque voie,
en particulier, l'ouverture de distribution (27) est formée par une buse (29).

5. Dispositif de tranchage selon la revendication 4,
dans lequel l'ouverture de distribution (27) est dirigée ou peut être dirigée vers la zone de découpe afin d'appliquer l'agent de traitement sur une surface de coupe respective (14) d'un produit (13) en train d'être tranché, ou l'ouverture de distribution (27) est dirigée ou peut être dirigée vers une zone de chute, située entre la zone de découpe et la zone de mise en portions, des tranches (17) séparées d'un produit respectif (13) en train d'être tranché, ou vers la zone de mise en portions, afin d'appliquer l'agent de traitement sur une face plate respective d'une tranche (17) qui tombe ou qui est couchée.

6. Dispositif de tranchage selon l'une des revendications 1 à 5,
dans lequel toutes les ouvertures de distribution (27) du dispositif d'application d'agent de traitement (21) ou au moins un groupe d'ouvertures de distribution (27) du dispositif d'application d'agent de traitement (21) sont intégrées dans une unité de distribution commune (31),
dans le cas d'une alimentation en produits (11) à plusieurs voies, l'unité de distribution (31) est associée à plusieurs voies (25).

7. Dispositif de tranchage selon l'une des revendications précédentes,
dans lequel le dispositif d'application d'agent de traitement (21) présente, dans le cas d'une alimentation en produits (11) à une seule voie, plusieurs ouvertures de distribution (27) pour ladite voie (25) ou, dans le cas d'une alimentation en produits (11) à plusieurs voies, plusieurs dites ouvertures de distribution pour au moins une voie (25), qui peuvent être commandées indépendamment les unes des autres.

8. Dispositif de tranchage selon l'une des revendications précédentes,
dans lequel l'agent de traitement comprend plusieurs composants stockés séparément qui peuvent être réunis avant ou lors de la distribution par une ouverture de distribution (27).

9. Procédé pour faire fonctionner un dispositif de tranchage (10) selon l'une des revendications précédentes, destiné à trancher des produits alimentaires, en particulier une trancheuse à haute performance, comprenant une alimentation en produits (11) qui achemine les produits à trancher (13) dans une direction d'alimentation (Z) sur une ou plusieurs voies vers une zone de découpe dans laquelle les produits (13) sont découpés en tranches (17) pendant une opération de découpe du dispositif de tranchage (10) au moyen d'une lame de découpe (15) effectuant des mouvements de découpe, en particulier en révolution et/ou en rotation,
une zone de mise en portions dans laquelle les tranches (17) sont mises en portions (20) qui comprennent chacune une tranche (17) ou plusieurs tranches (17) au moins partiellement superposées, et
un dispositif de commande (19) qui commande l'opération de découpe et qui dispose d'informations de fonctionnement concernant l'opération de découpe,
dans lequel
un dispositif d'application d'agent de traitement (21) est intégré dans le dispositif de tranchage (10), par lequel, pendant l'opération de découpe, un agent de traitement liquide est appliqué sur une surface de coupe respective (14) d'un produit (13) et/ou sur au moins une face plate respective d'au moins une tranche (17), et
le fonctionnement du dispositif d'application d'agent de traitement (21) est commandé sur la base d'au moins une partie des informations de fonctionnement du dispositif de commande (19).

10. Procédé selon la revendication 9,
dans lequel le dispositif d'application d'agent de traitement (21) est commandé en ce qui concerne le moment de distribution, en particulier par rapport au rythme des mouvements de travail de la lame de découpe (15), et/ou en ce qui concerne la quantité distribuée et/ou la direction de distribution de l'agent de traitement, et/ou
pendant l'opération de découpe, le moment de distribution et/ou la quantité distribuée et/ou la direction de distribution de l'agent de traitement sont variés, et/ou
pendant l'exécution de coupes à vide, au cours desquelles la lame de découpe (15) effectue des mouvements de découpe mais ne sépare aucune tranche (17) d'un produit respectif (13), aucun agent de traitement n'est distribué.

11. Procédé selon la revendication 9 ou 10,
dans lequel, pendant l'opération de découpe, la distribution de l'agent de traitement est adaptée dans le temps à la position de travail d'au moins un composant du dispositif de tranchage, en particulier à la position angulaire de la lame de découpe (15) en révolution ou en rotation ou à la position d'un dispositif d'alimentation de l'alimentation en produits (11) dans la direction d'alimentation (Z), de préférence à la position d'un support de produits (39) ou d'une bande transporteuse de produits (41).

12. Procédé selon l'une des revendications 9 à 11,
dans lequel, pendant l'opération de découpe, la distribution de l'agent de traitement est commandée en fonction des valeurs mesurées par au moins un capteur situé en amont du dispositif de tranchage (10) ou par au moins un capteur intégré dans le dispositif de tranchage (10), en particulier par un capteur (43) situé en amont du dispositif de tranchage (10) et destiné à déterminer le contour extérieur et/ou la structure interne d'un produit respectif (13), ou par un capteur (45) intégré dans le dispositif de tranchage (10) et destiné à déterminer la taille et/ou l'orientation d'une surface de coupe respective (14) d'un produit (13) en train d'être tranché, ou par un capteur (47, 49) intégré dans le dispositif de tranchage (10) et destiné à détecter le début et/ou la fin d'un produit (13) qui sera tranché ou qui est en train d'être tranché.

13. Procédé selon l'une des revendications 9 à 12,
dans lequel l'agent de traitement est appliqué sur une surface de coupe respective (14) d'un produit (13) en train d'être tranché, ou sur une face plate respective d'une tranche (17) qui tombe ou qui est couchée.
